Europäisches Patentamt

European Patent Office

Office européen des brevets

(19)

(11) Veröffentlichungsnummer: **0 000 937**
**B1**

(12) EUROPÄISCHE PATENTSCHRIFT

(21) Anmeldenummer: **78100714.1**

(22) Anmeldetag: **21.08.78**

(51) Int. Cl.³: **B 65 G 65/46**

(54) **Vorrichtung zum Entleeren von Silos, insbesondere Spänesilos.**

(30) Priorität: **24.08.77 DE 2738069**

(43) Veröffentlichungstag der Anmeldung:
**07.03.79 Patentblatt 79/05**

(45) Bekanntmachung des Hinweises auf die Patenterteilung:
**09.01.80 Patentblatt 80/01**

(84) Benannte Vertragsstaaten: **BE CH FR GB NL SE**

(56) Entgegenhaltungen:
**CH – A – 516 457**
**FR – A – 2 041 074**

(73) Patentinhaber: **Ing. Herbert Nolting GmbH & Co. KG Kesselbau,**
**Wiebuschstrasse 15,**
**D–4930 Detmold (DE)**

(72) Erfinder: **Klinge, Hans-Peter,**
**Wiebuschstrasse 15,**
**D–4930 Detmold 19 (DE)**

(74) Vertreter: **Meissner & Bolte Patentanwälte,**
**Slevogtstrasse 21,**
**D–2800 Bremen (DE)**

Vorrichtung zum Entleeren von Silos, insbesondere Spänesilos

Die Erfindung betrifft eine Vorrichtung zum Entleeren von Silos, insbesondere Spänesilos, mit einer im Bodenbereich des Silos in einer Ebene oder auf einem Kegelmantel rotierenden, das Gut einem Entleerungsschacht zuführenden Förderschnecke mit Förderspitzen, wobei der Entleerungsschacht von einer mit der Förderschnecke rotierenden Haube bis auf annähernd den Schneckenquerschnitt geschlossen gehalten ist.

Der Erfindung liegt die Aufgabe zugrunde, die bekannten Vorrichtungen der sie betreffenden Art, wie sie beispielsweise in der CH-PS 516 457 beschrieben sind, weiterzuentwickeln und zu verbessern. Die bekannte Vorrichtung hat sich im Betrieb durchaus bewährt. Es hat sich jedoch herausgestellt, daß bei bestimmten Spänearten, insbesondere bei feinen und erst recht bei feuchten Spänen, leicht Blockierung der mit der Förderschnecke um eine senkrechte Achse rotierenden Haube eintritt. Dies deshalb, weil die die Haube umgebenden feinen feuchten Späne durch den auf ihnen lastenden Druck der Spänesäule im Silo stark zusammengepreßt und an die Haube gepreßt werden, so daß sie wie Bremsbacken auf Bremstrommeln auf die Haube eine starke Bremswirkung ausüben. Diese Bremswirkung kann im Extremfall so groß werden, daß die Haube und damit die Förderschnecke in ihrer Rotation um die senkrechte Achse blockiert wird.

Die spezielle Aufgabe der Erfindung liegt nun darin, die bekannte Vorrichtung derart auszubilden, daß das vorgenannte Blockieren bei feuchten feinen Spänen nicht mehr eintreten kann.

Die Erfindung besteht darin, daß die Haube im Querschnitt die Form einer Spirale aufweist, deren Rücksprung vom größten auf den kleinsten Radius in der Ebene der Achse der Förderschnecke liegt, und wobei der sich stetig vergrößernde Radius der spiralförmigen Haube in Rotationsrichtung der Haube liegt.

Durch die erfindungsgemäße Ausbildung der Haube wird erreicht, daß die Schnecke, die mit ihren vorderen – von oben gesehen – vor dem Rücksprung liegenden Schneckengängen sich in das Gut (Späne) hineinfrißt und dabei gleichzeitig das Gut in Richtung Förderschneckenachse zum Entleerungsschacht und die Förderschnecke selber mit Haube um eine senkrechte Achse in Rotation versetzt. Die im Querschnitt spiralförmige Haube, die im abgewickelten Zustand praktisch einen Keil darstellt, löst sich kontinuierlich von dem umgebenden Spangut, wodurch ein Blockieren ausgeschlossen ist.

Die Erfindung kann in verschiedener Weise ausgeführt werden. Sie wird in der anliegenden Zeichnung an einem Ausführungsbeispiel erläutert, und zwar zeigt:

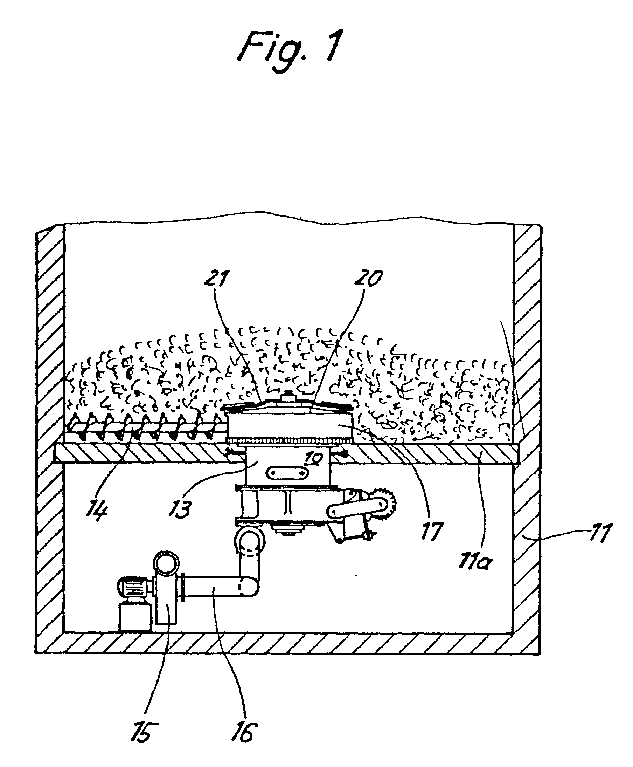

Figur 1 eine schematische Darstellung einer in einem Spänesilo angeordneten Vorrichtung zum Entleeren desselben,

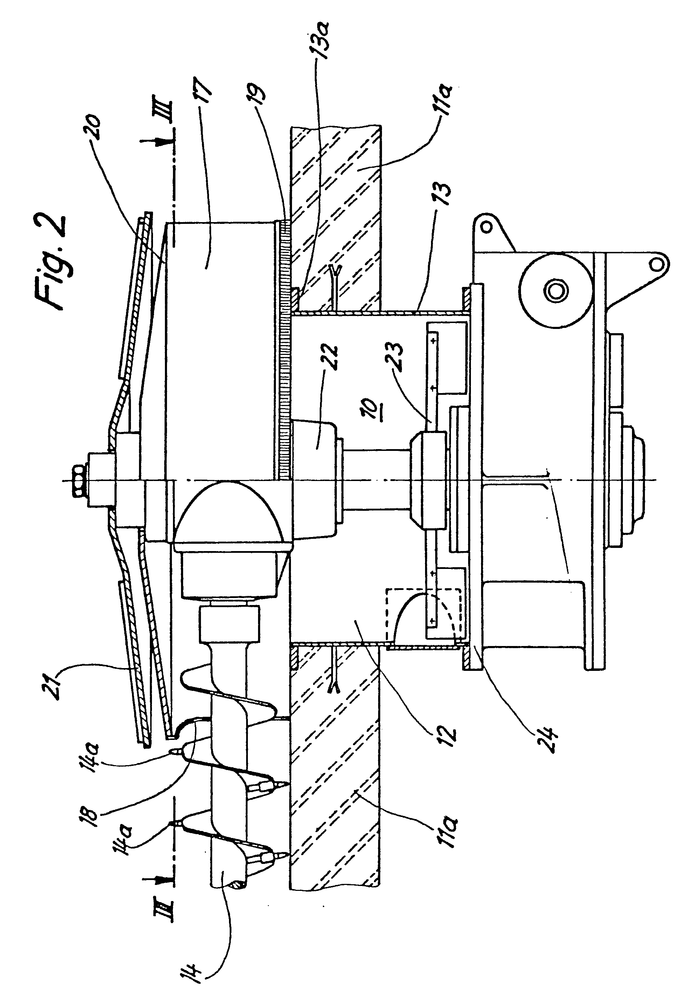

Figur 2 einen teilweisen Schnitt derselben Vorrichtung mit einer Förderschnecke und einer einen Entleerungsschacht überdeckenden Haube,

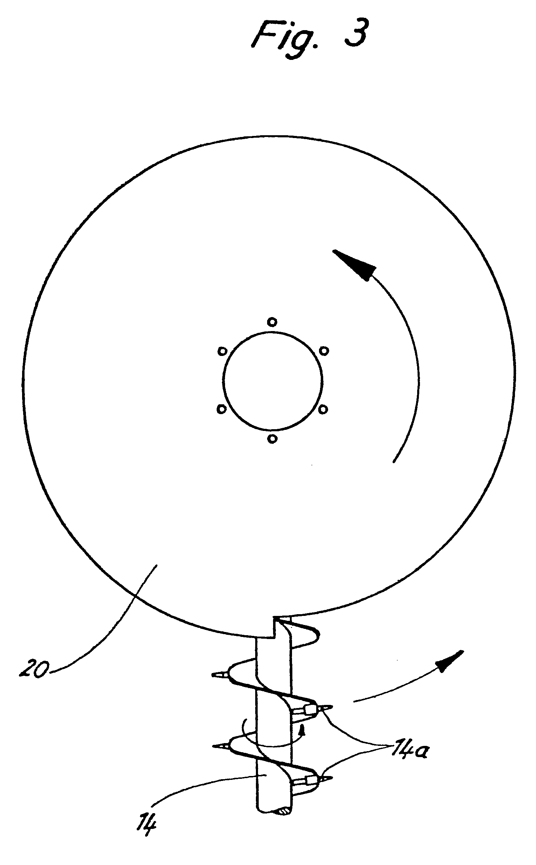

Figur 3 einen schematischen Schnitt nach Linie III-III der Figur 2 zur Darstellung der spiralförmigen Haube im Querschnitt mit Förderschnecke unter Fortlassung der übrigen Teile.

Die Vorrichtung 10 zum Entleeren von Spänesilos 11, Entstaubungsanlagen oder dergleichen ist in dem Bodenbereich des Spänesilos 11 lösbar angeordnet und weist einen, einen Entleerungsschacht 12 bildenden, in dem Siloboden 11a zu befestigenden Schachtmantel 13 auf; eine auf einer Ebene, vorzugsweise einer waagerechten Ebene oder einem Kegelmantel rotierende und sich axial drehende Förderschnecke 14 mit auswechselbaren Förderspitzen 14a führt das Spänegut des Silos 11 dem Entleerungsschacht 12 zu, von wo es mittels Gebläse 15 über Kanäle (Transportwege) 16 zu einer Verbrennungsanlage transportiert wird.

Die Schnecke 14 rotiert in bevorzugter Weise um eine senkrechte Achse und wälzt sich dabei auf dem Siloboden 11a ab; der Lagerpunkt der Förderschnecke 14 erstreckt sich im Bereich des Entleerungsschachtes 12 und die Rotationsachse für die Förderschnecke 14 fällt vorteilhafterweise mit der Längsachse des Entleerungsschachtes 12 zusammen.

Der Entleerungsschacht 12 ist von einer mit der Förderschnecke 14 rotierenden Haube 17 bis auf annähernd dem Schneckenquerschnitt geschlossen gehalten. Dabei faßt die Haube 17 mit einer als Einführöffnung 18 dienenden Aussparung über den schachtseitigen Endbereich der Förderschnecke 14, so daß das auszutragende Spänegut mittels der Förderschnecke 14 nur durch die Einführöffnung 18 in den Entleerungsschacht 12 bewegt werden kann.

Die Einführung 18 der Haube 17 ist von einer dem Schneckendurchmesser entsprechenden Öffnung im zylindrischen Haubenmantel gebildet, die untenseitig zum Schacht 12 hin durch senkrechte, parallellaufende tangentiale Kanten (Schnitte) geöffnet ist und ihre Öffnungskante einem kopfstehenden U entspricht.

Die Haube 17 weist im Querschnitt die Form einer Spirale auf, deren Rücksprung vom größten auf den kleinsten Radius in der Ebene der Achse der Förderschnecke liegt. Der Radius der spiralförmigen Haube vergrößert sich stetig in Rotationsrichtung derselben. Die Haube weist an dem unteren schachtseitigen Randbereich ihrer Mantelfläche ein bis auf die Einführöffnung 18 umlaufendes Dichtteil, wie Bürstenband 19 auf, das auf einem umlaufenden Rand 13a (Gleitfläche) des Schachtmantels 13 entlanggleitet und den Entleerungsschacht 12 somit im Berührungsbereich mit der Haube 17 gegenüber dem Siloraum abdichtet.

Die Haube 17 ist mit einer oberhalb der Schnecke 14 sich erstreckenden, die Haubendecke darstellenden kegeligen Gleitfläche 20 ausgestattet, deren Kegelspitze mit der Hauben-Drehachse zusammenfällt. Oberhalb der Haube 17 erstreckt sich ein schneller als die Haube 17 rotierendes Förderteil 21, wie Förderkreuz, das mit schräg zur Drehachse gerichteten und endseitig über den Haubenmantel (Haubendurchmesser) hinausragenden Förderflügeln ausgestattet ist; eine Querschnittachse jedes Flügels erstreckt sich schräg zur Drehachse.

Das Förderteil 21 dreht sich in waagerechter Ebene im Abstand zur Hauben-Gleitfläche 20, so daß sich zwischen Hauben-Gleitfläche 20 und Förderteil 21 ein Spänegutpolster bildet, das den Rundlauf der Förderschnecke 14 unterstützt; durch das sich schneller als die Haube 17 drehende Förderteil 21, dessen schrägstehende Flügel und die kegelige Gleitfläche 20 übt das Spänegutpolster eine Schubwirkung auf die Haube 17 aus, wodurch dessen Rotationsgeschwindigkeit und somit der Rundlauf der Förderschnecke 14 in einem gewissen Bereich erhöht wird.

Die Förderschnecke 14 und die Haube 17 sind an einem gemeinsamen innerhalb der Haube 17 und/oder des Entleerungsschachtes 12 angeordneten Antriebskopf 22 zur Rotationsbewegung befestigt, so daß die Schnecke 14 und die Haube 17 bewegungsmäßig gekoppelt wird; die axiale Drehbewegung der Förderschnecke 14 läßt sich mittels innerhalb des Antriebskopfes 22 angeordneter Kegelräder oder dergleichen vornehmen.

In dem Entleerungsschacht 12 ist unterhalb der Haube 17 beziehungsweise unterhalb des Antriebskopfes 22 ein Förderteil 23, wie Förderkreuz drehbar gelagert, das das in den Entleerungsschacht 12 bewegte Spänegut ein oder mehreren Durchfallöffnungen 24 zuführt, durch die das Spänegut in die Kanäle 16 gelangen kann.

Das untere Förderteil 23 ist mit dem oberen Förderteil 21 bewegungsmäßig verbunden und beide Förderteile 21, 23 werden unabhängig von der Hauben- und Schneckendrehung angetrieben. Beim Rundlauf der Förderschnecke 14 wird das in dem Silo 11 befindliche Spänegut von derselben durch deren Drehbewegung zur Einführöffnung 18 hin gefördert und kann durch diese Einführöffnung 18 in die Haube 17 und in den Entleerungsschacht 12 gelangen. Das sich unabhängig von der Schnecken- und Haubenrotation drehende Förderteil 21 dient als Lockerungskreuz und verhindert ein Verkrusten des Spänegutes beziehungsweise eine Spanbrückenbildung oberhalb der Haube 17, wobei gleichzeitig der Schneckenrundlauf unterstützt wird.

Durch die den Entleerungsschacht 12 bis auf annähernd den Schneckenquerschnitt zum Guteintritt verschließende Haube 17 wird ein unkontrolliertes Späneeindringen in den Entleerungsschacht 12 und in die Transportwege (Kanäle) 16 zur Verbrennungsanlage verhindert; gleichzeitig wird ein Zusetzen beziehungsweise ein Verstopfen der Vorrichtung ausgeschlossen, da nur im Bereich der Förderschnecke 14 Späne in den Entleerungsschacht 12 gelangen können.

Es ist möglich, den Antrieb der Förderschnecke und der Haube zur Rotation verschiedenartig auszuführen und die Bewegung der Förderteile unterschiedlich vorzusehen; weiterhin läßt sich anstelle des Bürstenbandes als Dichtteil auch ein andersartiges flexibles oder elastisches Teil, wie Gummi- oder Kunststoffprofil vorsehen.

**Patentanspruch**

Vorrichtung zum Entleeren von Silos, insbesondere Spänesilos, mit einer im Bodenbereich des Silos in einer Ebene oder auf einem Kegelmantel rotierenden, das Gut einem Entleerungsschacht zuführenden Förderschnecke mit Förderspitzen, wobei der Entleerungsschacht von einer mit der Förderschnecke rotierenden Haube bis auf annähernd dem Schneckenquerschnitt geschlossen gehalten ist, dadurch gekennzeichnet, daß die Haube (17) im Querschnitt die Form einer Spirale aufweist, deren Rücksprung vom größten auf den kleinsten Radius in der Ebene der Achse der Förderschnecke (14) liegt, und wobei der sich stetig vergrößernde Radius der spiralförmigen Haube in Rotationsrichtung der Haube liegt.

**Claim**

Device for the emptying of bins, particularly swarf bins, with a conveyor worm provided with conveyor points and rotating in a plane or on a conical surface and guiding the material to an emptying shaft passage, the emptying shaft passage being kept closed as far as approximately the cross-section of the conveyor worm by a hood rotating with the conveyor worm, characterised in that in cross-section the hood (17) has the form of a spiral of which the discontinuity from the greatest to the smallest radius lies in the plane of the axis of the conveyor worm (14), and wherein the continuously increasing radius of the spiral-shaped hood lies in the direction of rotation of the hood.

**Revendication**

Dispositif pour la vidange de silos, notamment silos à copeaux, avec une vis transporteuse, pourvue de pointes transporteuses, tournant dans le fond du silo ou sur une enveloppe conique pour amener les produits à un puits de vidange, ce puits étant maintenu fermé par un capot tournant avec la vis, jusqu'à environ la section transversale de la vis, caractérisé en ce que le capot (17) présente une section en forme de spirale dont le ressort du rayon maximal au rayon minimal se trouve en majeure partie sur le plus petit rayon dans le plan de l'axe de la vis (14), le rayon du capot en spirale allant progressivement en croissant dans la direction de rotation du capot.

# *Fig. 1*

*Fig. 2*

0 000 937

# Fig. 3

20

14a

14